# EUROPÄISCHE PATENTSCHRIFT

(11) **EP 3 009 683 B1**
(45) Veröffentlichungstag und Bekanntmachung des Hinweises auf die Patenterteilung: **18.09.2019**
(21) Anmeldenummer: 15189636.2
(22) Anmeldetag: 13.10.2015
(51) Int. Cl.: F04D 27/02, F01D 17/10, F02C 6/08, F02K 3/075

(54) **ANORDNUNG UND VERFAHREN ZUM ABBLASEN VON VERDICHTERLUFT IN EINEM TRIEBWERK**
DEVICE AND METHOD FOR BLEEDING COMPRESSOR AIR IN AN ENGINE
SYSTEME ET PROCEDE POUR PRÉLÈVEMENT D'AIR DE COMPRESSEUR D'UN PROPULSEUR

(30) Priorität: 16.10.2014 DE 102014221049
(43) Veröffentlichungstag der Anmeldung: 20.04.2016
(73) Patentinhaber: Rolls-Royce Deutschland Ltd & Co KG, 15827 Blankenfelde-Mahlow (DE)
(72) Erfinder: SIERING, Jean-Marc, 12357 Berlin (DE); HELMING, Klaus, 15806 Zossen (DE)
(74) Vertreter: Maikowski & Ninnemann Patentanwälte Partnerschaft mbB

(56) Entgegenhaltungen:
- EP-A1- 2 835 522
- EP-A2- 1 522 710
- DE-A1- 2 813 667

## Beschreibung

Die Erfindung betrifft eine Anordnung und ein Verfahren zum Abblasen von Verdichterluft in einem Triebwerk.

Es ist bei Verdichtern eines Triebwerks bekannt, dass der Massenstrom durch den Verdichter durch die Entnahme von Verdichterluft variiert wird, um seine aerodynamischen Stabilität zu optimieren. Das Abblasen von Verdichterluft dient zudem auch dazu, instabile Betriebszustände eines Niederdruckverdichters zu unterbinden.

Im Stand der Technik ist es bekannt, zur Steuerung des Abblasens von Verdichterluft Klappensysteme oder Scheiben vorzusehen, mit denen der Abblasekanal, durch den Verdichterluft abgeblasen wird, entweder geöffnet oder geschlossen werden können. So ist beispielsweise aus der Druckschrift US 5 044 153 A eine Anordnung zur Entnahme von Verdichterluft aus einem Niederdruckverdichter bekannt, bei der in der Wandung des Niederdruckverdichters verschwenkbare Ventilklappen zum Verschließen bzw. Öffnen eines Abblasekanals vorgesehen sind. Eine solche Anordnung zum regelbaren Abblasen von Verdichterluft aus einem Niederdruckverdichter wird auch als BBV-System (BBV = "Booster Bleed Valve") bezeichnet.

In BBV-Systemen des Standes der Technik können einfache Ventilklappen oder andere Verschließmittel eines Abblasekanals verstellt werden. Es erfolgt eine starke Verwirbelung von Luft. Durch solche Verwirbelungen entstehen hohe Druckverluste, die wiederum dazu führen können, dass in Teillastbereichen des Niederdruckverdichters ein so niedriges Druckverhältnis zum Nebenstromkanal entsteht, dass ein Abblasen des erforderlichen Massenstroms nicht mehr möglich ist. Darüber hinaus führen solche Verwirbelungen zu einem unerwünschten Lärmzuwachs und Effizienzverlust. Weitere Systeme, die mit Verschließelementen arbeiten, gehen aus der DE 28 13 667 A1 oder der EP 1 522 710 A2 hervor.

Es besteht ein Bedarf, Anordnungen bereitzustellen, bei denen es möglich ist, eine definierte Einstellung des Massenstroms, der durch einen Abblasekanal geleitet wird, vorzunehmen, ohne dass eine solche Einstellung des Massenstroms mit den genannten Nachteilen einhergeht.

Der vorliegenden Erfindung liegt dementsprechend die Aufgabe zugrunde, eine Anordnung und ein Verfahren zum Abblasen von Verdichterluft in einem Triebwerk bereitzustellen, die eine definierte und verlustarme Einstellung des Massenstroms ermöglichen, der durch einen Abblasekanal geleitet wird.

Diese Aufgabe wird erfindungsgemäß durch eine Anordnung mit den Merkmalen des Anspruchs 1 und ein Verfahren mit den Merkmalen des Anspruchs 14 gelöst. Ausgestaltungen der Erfindung sind in den abhängigen Ansprüchen angegeben. Danach zeichnet sich die erfindungsgemäße Lösung dadurch aus, dass die Kanalgeometrie des Abblasekanals einstellbar ist. Die Erfindung beruht somit auf dem Gedanken, einen Abblasekanal nicht mittels eines Verschließelementes zu verschließen oder teilweise zu verschließen, sondern die Kanalgeometrie des Abblasekanals selbst stromab einer Öffnung, über die die abzulassende Verdichterluft in den Abblasekanal gelangt, variabel auszugestalten, so dass zumindest eine lokale Änderung in der Geometrie des Abblasekanals bereitgestellt werden kann. Die geänderte Kanalgeometrie korrespondiert dabei mit einer Änderung der Querschnittsfläche des Abblasekanals zumindest in einem Teilbereich und ermöglicht somit eine definierte Einstellung des Luftstroms im Abblasekanal.

Die Querschnittsfläche, deren Änderung mit einer Änderung der Kanalgeometrie einhergeht, wird dabei durch die äußeren Begrenzungsflächen des Abblasekanals gebildet, d.h. durch diejenigen Strukturen, die den Gasstrom unter Bildung des Abblasekanals außen begrenzen. So betrachtet die erfindungsgemäße Lösung nicht Anordnungen, bei denen ein zusätzliches Objekt in den Abblasekanal eingebracht wird und durch ein solches Objekt möglicherweise eine reduzierte, für den Gasstrom zur Verfügung stehende Querschnittsfläche vorliegt. Vielmehr betrachtet die Erfindung eine Veränderung der Kanalgeometrie selbst, d.h. hinsichtlich der äußeren Begrenzungsflächen des Abblasekanals erfolgen eine Änderung der Geometrie und eine zumindest lokale Änderung der Querschnittsfläche im Falle einer Verstellung.

Die Kanalgeometrie und die durchströmte Querschnittsfläche des Abblasekanals sind somit stromab einer Öffnung einstellbar, über die die abzulassende Verdichterluft in den Abblasekanal gelangt. Eine äußere (stromab der Öffnung vorgesehene) Begrenzungsfläche des Abblasekanals ist hier dementsprechend quer zur Strömungsrichtung der Verdichterluft in zumindest einem Teilbereich verstellbar, um innerhalb des Abblasekanals zumindest lokal dessen Kanalgeometrie zu verändern und variabel einzustellen.

Gemäß einer Ausgestaltung der Erfindung ist vorgesehen, dass die Anordnung Mittel umfasst, durch die die Querschnittsfläche des Abblasekanals zumindest in einem Teilbereich des Abblasekanals veränderbar ist. Bevorzugt sind solche Mittel derart ausgestaltet, dass sich der Querschnitt des Abblasekanals kontinuierlich verändern lässt. Damit ist es möglich, den Massenstrom durch den Abblasekanal kontinuierlich einzustellen.

Eine Ausgestaltung der Erfindung sieht vor, dass der Abblasekanal ein verschiebbares Element umfasst, das in einem Teilbereich des Abblasekanals dessen Begrenzung im Hinblick auf das im Abblasekanal strömende Fluid bildet. Bei Verschiebung des verschiebbaren Elements in Strömungsrichtung des Abblasekanals wird die Kanalgeometrie geändert. Die Kanalgeometrie wird beispielsweise dahingehend geändert, dass die minimale Querschnittsfläche des Abblasekanals geändert wird.

Das verschiebbare Element kann als verschiebbare Drossel ausgebildet sein und umfasst beispielsweise ein scheibenförmig oder ringförmig ausgebildetes Element. Es ist bevorzugt vorgesehen, dass das verschiebbare Element zum Inneren des Abblasekanals hin konvex geformt ist einen stetigen Übergang ohne Unstetigkeitsstellen zu angrenzenden Begrenzungsflächen ausbildet, so dass es mit möglichst geringen Strömungsverlusten umströmt wird.

Weiter kann vorgesehen sein, dass das verschiebbare Element in einem Abschnitt des Abblasekanals angeordnet ist, der sich im Wesentlichen parallel zu einem Nebenstromkanal, in den die Verdichterluft abgeblasen wird, erstreckt. Ein solcher parallel zum Nebenstromkanal verlaufender Abschnitt des Abblasekanals bewirkt eine Parallelführung des Luftstroms im Abblasekanal und im Nebenstromkanal, die vorteilhafterweise ermöglicht, die Luftströme unter nur geringer Verwirbelung und dementsprechend mit hoher Effizienz zusammenzuführen.

Eine weitere Ausgestaltung sieht vor, dass das verschiebbare Element in einem Abschnitt des Abblasekanals angeordnet ist, der sich verengt und/oder der gebogen ausgebildet ist. Das Verschieben des verschiebbaren Elementes in einem solchen Abschnitt in oder entgegen der Strömungsrichtung führt automatisch dazu, dass abhängig von der Position des verschiebbaren Elementes eine unterschiedliche minimale Querschnittsfläche des Abblasekanals realisiert ist.

Eine weitere Ausgestaltung der Erfindung sieht vor, dass mindestens ein Kanalsegment, das den Abblasekanal begrenzt, verstellbar ausgebildet ist. Gemäß dieser Ausgestaltung wird eine Begrenzungsfläche des Abblasekanals zumindest in einem Teilbereich insgesamt in ihrer Position verstellt, so dass sich die Kanalgeometrie ändert. Hierzu kann beispielsweise vorgesehen sein, dass ein Kanalsegment im Wesentlichen quer zur Strömungsrichtung im Abblasekanal verschiebbar ist. Gemäß einer Ausführungsvariante ist vorgesehen, dass ein Kanalsegment in axialer Richtung verschiebbar ist, wobei die axiale Richtung die Längserstreckungsrichtung eines Triebwerks bezeichnet, in dem die erfindungsgemäße Anordnung angeordnet ist.

Eine weitere Ausgestaltung der Erfindung sieht vor, dass der Abblasekanal durch eine Mehrzahl von Kanalsegmenten begrenzt ist und zumindest einige der Kanalsegmente verstellbar ausgebildet sind derart, dass der Abstand der Kanalsegmente zueinander veränderbar ist.

Das mindestens eine verschiebbare Kanalsegment bildet in einer Ausgestaltung der Erfindung eine vordere oder eine hintere axiale Begrenzung des Abblasekanals in einem Bereich des Abblasekanals, in dem dieser sich in eine Richtung erstreckt, die eine radiale Komponente umfasst. Beispielsweise ist das verschiebbare Kanalsegment am in Strömungsrichtung hinteren Abschnitt eines Splitters ausgebildet, der den Primärstromkanal vom Nebenstromkanal des Triebwerks trennt. Gemäß einer anderen Ausgestaltung ist das verschiebbare Kanalsegment durch den in Strömungsrichtung vorderen Abschnitt eines Gehäusebereichs gebildet, der sich in axialer Richtung an einen solchen Splitter anschließt.

Das verschiebbare Kanalsegment bildet notwendigerweise einen Übergangsbereich zu ortsfesten Gehäusesegmenten, die nicht verstellbar sind. Ein solcher Übergangsbereich wird gemäß einer Ausgestaltung der Erfindung durch eine Parallelführung mittels überlappender Gehäuseteile zum einen des verschiebbaren Kanalsegments und zum anderen eines ortsfesten Gehäusesegments bereitgestellt. Alternativ kann ein solcher Übergangsbereich z.B. durch eine Teleskopführung des verschiebbaren Kanalsegments am ortsfesten Gehäusesegment erfolgen.

Das vorgesehene Mittel zur Einstellung der Kanalgeometrie wird beispielsweise durch einen Aktuator verstellt, der gehäuseseitig ortsfest angeordnet ist und über mechanische Koppelelemente wie z. B. Verbindungsstangen mit den Mitteln zur Einstellung der Kanalgeometrie verbunden ist.

Auch wenn durch die erfindungsgemäße Anordnung die Geometrie eines Abblasekanals insgesamt veränderbar ist, so kann gemäß einer Ausführungsvariante der vorliegenden Erfindung zusätzlich ein Verschließelement zum vollständigen Verschließen des Abblasekanals vorgesehen sein. Beispielsweise ermöglicht ein solches Verschließelement, einen Abblasekanal vollständig zu verschließen, während die erfindungsgemäße Einstellbarkeit der Kanalgeometrie dazu benutzt wird, im offenen Zustand des Verschließelementes den Massenstrom der durch den Abblasekanal geleiteten Luft einzustellen.

Die erfindungsgemäße Anordnung ist gemäß einem Ausführungsbeispiel dazu ausgebildet, Verdichterluft aus dem Primärstromkanal eines Turbofan-Triebwerks über den Abblasekanal in einen Nebenstromkanal des Turbofan-Triebwerks einzuleiten.

Die Erfindung betrifft auch ein Verfahren zum Abblasen von Verdichterluft in einem Triebwerk, bei dem abzublasende Verdichterluft aus einem Verdichter des Triebwerks in einen Abblasekanal geleitet wird. Das Verfahren sieht vor, dass zum Einstellen des Massenstroms der abzublasenden Verdichterluft die Kanalgeometrie des Abblasekanals verändert wird und der Abblasekanal nicht mittels eines Verschließelements verschlossen wird..

Die Erfindung wird nachfolgend unter Bezugnahme auf die Figuren der Zeichnung anhand mehrerer Ausführungsbeispiele näher erläutert. Es zeigen:
- Figur 1: einen Längsschnitt durch ein erstes Ausführungsbeispiel einer Anordnung zum Abblasen von Verdichterluft in einem Triebwerk, die einen in seiner Kanalgeometrie einstellbaren Abblasekanal umfasst;
- Figur 2A: eine Ansicht des Teilbereichs X der Figur 1 in einem ersten Zustand;
- Figur 2B: eine Ansicht des Teilbereichs X der Figur 1 in einem zweiten Zustand;
- Figur 3: einen Längsschnitt durch ein zweites Ausführungsbeispiel einer Anordnung zum Abblasen von Verdichterluft in einem Triebwerk, die einen in seiner Kanalgeometrie einstellbaren Abblasekanal umfasst;
- Figur 4A: eine Ansicht des Teilbereichs X der Figur 3 in einem ersten Zustand;
- Figur 4B: eine Ansicht des Teilbereichs X der Figur 3 in einem zweiten Zustand;
- Figur 5: einen Längsschnitt durch ein drittes Ausführungsbeispiel einer Anordnung zum Abblasen von Verdichterluft in einem Triebwerk, die einen in seiner Kanalgeometrie einstellbaren Abblasekanal umfasst;
- Figur 6A: eine Ansicht des Teilbereichs X der Figur 5 in einem ersten Zustand;
- Figur 6B: eine Ansicht des Teilbereichs X der Figur 5 in einem zweiten Zustand; und
- Figur 7: einen Längsschnitt durch ein viertes Ausführungsbeispiel einer Anordnung zum Abblasen von Verdichterluft in einem Triebwerk, die einen in seiner Kanalgeometrie einstellbaren Abblasekanal umfasst.

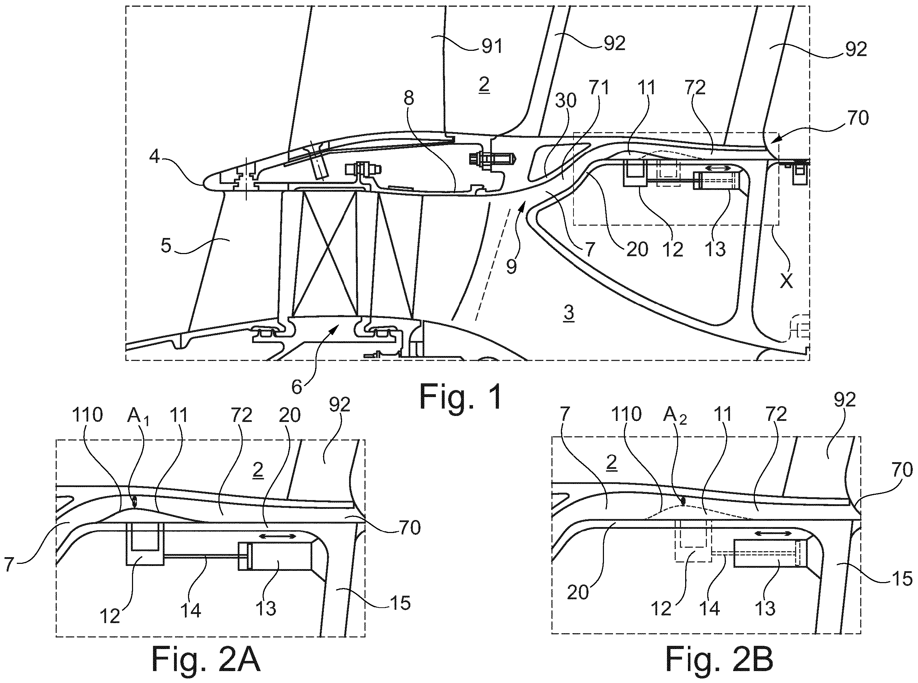

Die Figur 1 zeigt Komponenten eines Turbofan-Triebwerks. Der dargestellte Ausschnitt eines Turbofan-Triebwerks umfasst einen Nebenstromkanal 2 und einen Primärstromkanal 3, in die durch einen Fan (nicht dargestellt) angesaugte Luftmasse geleitet wird. Der Nebenstromkanal 2 und der Primärstromkanal 3 werden dabei hinter dem Fan durch einen Splitter 4 voneinander getrennt. Der Primärstromkanal 3 führt durch das Kerntriebwerk. Das Kerntriebwerk umfasst im Falle eines zweiwelligen Triebwerks einen Niederdruckverdichter 6, einen Hochdruckverdichter, eine Brennkammer, eine Hochdruckturbine und eine Niederdruckturbine.

Im Kontext der vorliegenden Erfindung ist das Abblasen von Verdichterluft des Niederdruckverdichters 6 von Bedeutung. Es wird jedoch darauf hingewiesen, dass die Prinzipien der Erfindung, die nachfolgend anhand des Abblasens von Verdichterluft eines Niederdruckverdichters erläutert werden, in gleicher Weise auch für das Abblasen von Verdichterluft z.B. eines Hochdruckverdichters oder eines Mitteldruckverdichters (bei einem dreiwelligen Triebwerk) eingesetzt werden können.

Der Niederdruckverdichter 6 umfasst eine Verdichterstufe, die auch als Booster-Stufe bezeichnet wird. Statt einer Verdichterstufe können auch mehrere Verdichterstufen vorgesehen sein. Vor dem Niederdruckverdichter 6 ist im Primärstromkanal 3 eingangs ein Leitrad 5 angeordnet, das dazu dient, Drall aus dem Luftstrom zu nehmen, den dieser im nabennahen Bereich des Fans erhalten hat.

Im Nebenstromkanal 2 sind ein Leitrad 91 sowie Stützstreben 92 angeordnet.

Der Niederdruckverdichter 6 ist von einem Umfangsgehäuse 8 umgeben, das den Primärstromkanal 3 radial außen begrenzt. Radial innen ist der Primärstromkanal 3 durch entsprechende Kranzoberflächen der Rotoren und Statoren bzw. durch die Nabe oder durch mit der Nabe verbundene Elemente der entsprechenden Antriebswelle gebildet.

In Strömungsrichtung hinter dem Niederdruckverdichter 6 weist das Umfangsgehäuse 8 eine Öffnung 9 auf, die sich zu einem Abblasekanal 7 öffnet. Der Abblasekanal 7 dient dem Abblasen von Verdichterluft des Niederdruckverdichters 6. Der Abblasekanal 7 bläst die Verdichterluft in den Nebenstromkanal 2 aus und weist dementsprechend an seinem hinteren Ende 70 eine Öffnung zum Nebenstromkanal 2 oder alternativ zu Strukturen auf, die ihrerseits mit dem Nebenstromkanal 2 verbunden sind. Der Verlauf des Abblasekanals 7 ist dabei in der Figur 1 nur beispielhaft dargestellt.

Die Öffnung 9 im Primärstromkanal 3 zum Abblasekanal 7 kann umlaufend ausgebildet sein oder aus einer Mehrzahl von gleichmäßig auf dem Umfang verteilten Öffnungen bestehen. Der Abblasekanal 7 kann rotationssymmetrisch ausgebildet sein, wobei er jedoch durch strukturelle Elemente beispielsweise eines strukturelle Lasten aufnehmenden Zwischengehäuses (IMC) unterbrochen sein kann.

Der Abblasekanal 7 weist eine Kanalgeometrie auf, die einstellbar ist, so dass auch der Massenstrom der durch den Abblasekanal 7 abgeblasenen Verdichterluft in definierter Weise einstellbar ist. Dies wird im Folgenden anhand mehrerer Ausführungsvarianten beschrieben.

Der Abblasekanal 7 wird durch Wände begrenzt, die mehrteilig ausgebildet sein können. Die Wände umfassen eine axial vordere Wand 30 und eine axial hintere Wand 20.

Wie insbesondere in den Teilansichten der Figuren 2A, 2B zu erkennen ist, befindet sich im Abblasekanal 7 ein verschiebbares Element 11, das im Abblasekanal 7 äußere Begrenzungsflächen 110 für das im Abblasekanal 7 strömenden Fluid darstellt. Die Begrenzungsflächen 110 sind dabei konvex ausgebildet, so dass die Strömung im Wesentlichen laminar und ohne Verwirbelungen am verschiebbaren Element 11 vorbeiströmt.

Im dargestellten Ausführungsbeispiel, jedoch nicht notwendigerweise, befindet sich das verschiebbare Element 11 in einem Abschnitt 72 des Abblasekanals 7, der im Wesentlichen in axialer Richtung und dementsprechend im Wesentlichen parallel zum Nebenstromkanal 2 verläuft. Des Weiteren umfasst der Abblasekanal 7 angrenzend an die Öffnung 9 einen Abschnitt 71, der eine radiale Komponente im Hinblick auf seine Erstreckungsrichtung aufweist.

Durch Verschieben des verschiebbaren Elements 11 kann die Querschnittsfläche im Abschnitt 72 des Abblasekanals 7 verändert werden, d. h. diejenige Fläche in der Querschnittsbetrachtung, durch die abzublasende Luft transportiert werden kann.

Das verschiebbare Element 11 ist innerhalb des Abschnitts 72 in Strömungsrichtung des Abblasekanals 7 verschiebbar, d. h. im betrachteten Ausführungsbeispiel in axialer Richtung. Die axiale Verschiebbarkeit wird durch einen Aktuator 13 bereitgestellt, der ortsfest angeordnet und mit einer ortsfesten Strebe 15 oder einer anderen feststehenden Gehäusestruktur verbunden ist. Der Aktuator 13 ist über eine Koppelstange 14 oder ein anderes Koppelmittel mit einem Verbindungsteil 12 verbunden, das durch eine Aussparung, beispielweise einen Schlitz (nicht gesondert dargestellt) in der einen Wand 20 ragt und mit dem verschiebbaren Element 11 fest verbunden ist. Die Wand 20 stellt angrenzend an das verschiebbare Element 11 die äußere Begrenzungsfläche der einen Seite des Abblasekanals 7 dar. Im Bereich des verschiebbaren Elementes 11 ist die Wand 20 auf ihrer dem Abblasekanal 7 zugewandten Seite jedoch von dem verschiebbaren Element 11 bedeckt und stellt dieses mit seiner Fläche 110 die äußere Begrenzungsfläche der einen Seite des Abblasekanals 7 dar.

Mittels des Aktuators 13, der Koppelstange 14 und dem Verbindungsteil 12 ist das verschiebbare Element 11 axial im Abschnitt 72 des Abblasekanals 7 verschiebbar. Die Figuren 2A, 2B zeigen beispielhaft zwei Positionen des verschiebbaren Elementes 11.

Bei einer Verschiebung des verschiebbaren Elementes 11 ändert sich die Querschnittsfläche im Abblasekanal 7 im Bereich des verschiebbaren Elementes 11. Dies hängt damit zusammen, dass der Abblasekanal 7 in dem betrachteten Abschnitt 72 konvergent zusammenläuft, so dass, je weiter das verschiebbare Element 11 in axialer Richtung nach hinten verschoben ist, desto kleiner die zum Durchströmen von Verdichterluft bereitgestellter Querschnittsfläche ist. In den Figuren 2A, 2B ist die kleinste Querschnittsfläche mit A₁, A₂ gekennzeichnet. Es ist zu erkennen, dass wegen des konvergenten Verlaufs des Abblasekanals 7 im Abschnitt 72 in der in Figur 2B dargestellten Position des verschiebbaren Elementes 11 die kleinste Querschnittsfläche A₂ kleiner ist als in der in Figur 2A dargestellten Position mit der kleinsten Querschnittsfläche A₁.

Das verschiebbare Element 11 ist beispielsweise ringförmig ausgebildet, wobei es sich über einen bestimmten Kreisbogen im Abblasekanal 7 erstrecken kann. Es können mehrere solcher ringförmiger Strukturen vorgesehen sein, die sich jeweils über einen Kreisbogens erstrecken. Grundsätzlich kann das ringförmige Element 11 auch vollständig ringförmig ausgebildet sein und sich dementsprechend über einen Bereich von 360° erstrecken, wobei es gegebenenfalls durch strukturelle Elemente unterbrochen sein kann.

In anderen Ausgestaltungen ist das verschiebbare Element 11 durch ein Scheibenelement realisiert. Aufgrund seiner Veränderung des Querschnitts des Abblasekanals 7 kann das verschiebbare Element 11 auch als Drossel bezeichnet werden.

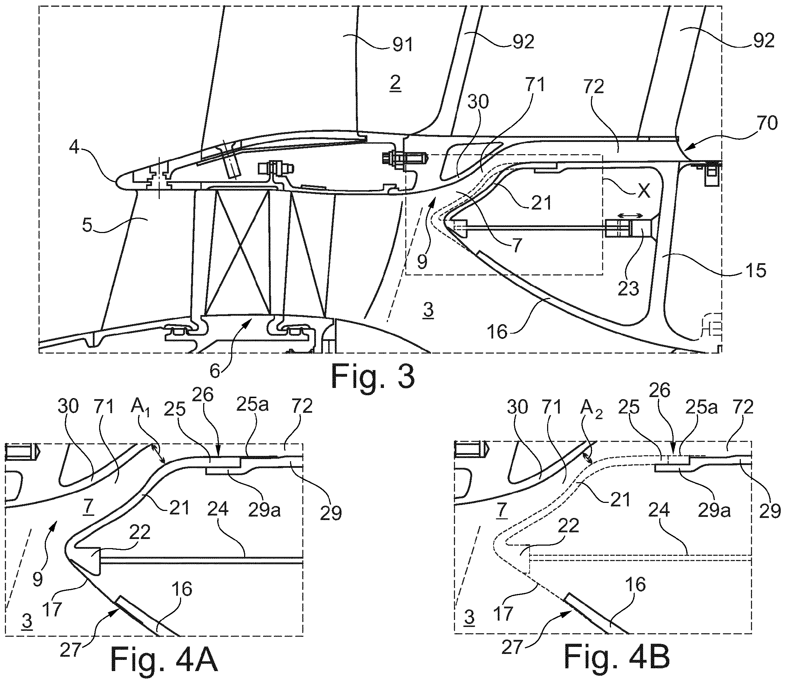

Die Figuren 3, 4A, 4B zeigen ein weiteres Ausführungsbeispiel einer einstellbaren Kanalgeometrie eines Abblasekanals 7. Was den strukturellen Aufbau des Nebenstromkanals 2 und des Primärstromkanals 3 angeht, so gelten die Erläuterungen zu den Figuren 1, 2A, 2B in entsprechender Weise.

Im Ausführungsbeispiel der Figuren 3, 4A, 4B wird eine veränderbare Kanalgeometrie durch ein verstellbares Kanalsegment 21 zur Verfügung gestellt, das einen Bestandteil der axial hinteren Wand des Abblasekanals 7 bildet. Eine Änderung der Querschnittsfläche und damit der Kanalgeometrie erfolgt dadurch, dass das Kanalsegment 21 in einer Richtung verstellbar ist, die zumindest eine Komponente aufweist, die quer zur Strömungsrichtung im Abblasekanal 7 verläuft.

Im Ausführungsbeispiel der Figuren 3, 4A, 4B ist das verstellbare Kanalsegment 21 an einem Abschnitt 71 des Abblasekanals 7 ausgebildet, der im Wesentlichen in radialer Richtung verläuft oder zumindest eine radiale Komponente aufweist, anders als der Abschnitt 72 des Abblasekanals, der parallel zum Nebenstromkanal 2 und dementsprechend in axialer Richtung verläuft.

Zum Verschieben des Kanalsegments 21 ist ein ortsfest an einer Strebe 15 angeordneter Aktuator 23 vorgesehen, der über eine Koppelstange 24 oder andere Koppelmittel mit einem strukturell verstärkten Teilbereich 22 des Kanalsegments 21 verbunden ist. Über den Aktuator 23 kann das Kanalsegment 21 in axialer Richtung verschoben werden, wie anhand der Figuren 4A, 4B beispielhaft dargestellt ist. Bei einem Verschieben des Kanalsegments 21 in axialer Richtung verengt oder verbreitert sich der Abblasekanal 7 entsprechend. So ist in der Position der Figur 4B der die minimale Querschnittsfläche A₂ des Abblasekanals 7 geringer als die minimale Querschnittsfläche A₁ in der Position der Figur 4A.

Um eine Verschiebbarkeit des Signalsegments 21 zu erreichen, ist es erforderlich, Übergangsbereiche zu benachbarten, nicht verschiebbaren Kanalsegmenten oder anderen ortsfesten Gehäusesegmenten bereitzustellen. Dies erfolgt im dargestellten Ausführungsbeispiel mittels Parallelführungen 26, 27. So ist eine erste Parallelführung 26 im axial verlaufenden Abschnitt 72 des Abblasekanals 7 ausgebildet, indem ein randseitiger Abschnitt 25 des bewegbaren Kanalsegments 21 parallel zu einem Abschnitt 29a eines ortsfesten Kanalsegments 29 verläuft. Ein mit dem Abschnitt 25 verbundenes Abdeckblech 25a dient dazu, stets einen glatten Abschluss zum Abblasekanal 7 bereitzustellen.

Des Weiteren ist das Kanalsegment 21 mit einem Abdeckbleich 17 verbunden, das in einem Überlappungsbereich eine Parallelführung 27 mit einem feststehenden Gehäusesegment 16 bildet. Das Abdeckblech 17 und das Gehäusesegment 16 begrenzen dabei nicht den Abblasekanal 7, sondern den Primärströmungskanal 3. Dies ist darauf zurückzuführen, dass der Teilbereich 22 des Kanalsegments 21 an die Öffnung 9 zum Abblasekanal 7 angrenzt. Dies ist aber nicht notwendigerweise der Fall.

Es gilt wiederum, dass das verschiebbare Kanalsegment 21 ringförmig ausgebildet und sich über einen definierten Kreisbogen erstrecken oder vollständig als Ring ausgebildet sein kann, wobei es gegebenenfalls durch strukturelle Elemente unterbrochen ist.

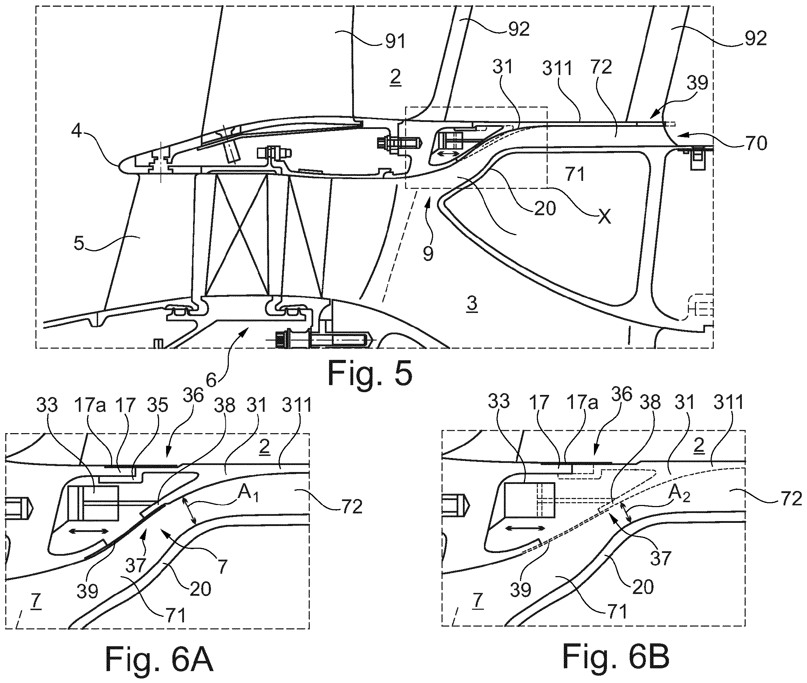

Die Figuren 5, 6A, 6B zeigen ein drittes Ausführungsbeispiel einer erfindungsgemäßen Anordnung. Was den strukturellen Aufbau des Nebenstromkanals 2 und des Primärstromkanals 3 angeht, so gelten die Erläuterungen zu den Figuren 1, 2A, 2B in entsprechender Weise.

Das grundsätzliche Prinzip der Anordnung der Figuren 5, 6A, 6B ist das gleiche wie bei dem Ausführungsbeispiel der Figuren 3, 4A, 4B insofern, als ein Kanalsegment quer zur Strömungsrichtung des Abblasekanals 7 verschiebbar ausgestaltet ist. Beim Ausführungsbeispiel der Figuren 5, 6A, 6B ist dieses verschiebbare Kanalsegment in einem Gehäuseabschnitt ausgebildet, der bezogen auf die axiale Richtung eine vordere axiale Begrenzung des Abblasekanals 7 bildet, während im Ausführungsbeispiel der Figuren 3, 4A, 4B das verstellbare Kanalsegment eine hintere axiale Begrenzung des Abblasekanals 7 bildet.

So ist beim Ausführungsbeispiel der Figuren 5, 6A, 6B das verstellbare Kanalsegment 31 im axial hinteren Bereich der gleichen Struktur ausgebildet, die auch den Splitter 4 bildet. Das Kanalsegment 31 ist über einen ortsfesten Aktuator 33 und eine Koppelstange 34 oder andere Koppelmittel in axialer Richtung verschiebbar. Bei einem Verschieben des Kanalsegments 31 verringert sich die minimale Querschnittsfläche im Abblasekanal 7, wie anhand der Figuren 6A, 6B dargestellt ist. Die minimalen Querschnittsflächen sind wiederum mit A₁ und A₂ gekennzeichnet.

Zur Realisierbarkeit einer Verschiebbarkeit des Kanalsegments 31 sind ebenso wie im Ausführungsbeispiel der Figuren 3, 4A, 4B Überlappungsbereiche mit Parallelführungen 36, 37 vorgesehen, an denen Abschnitte 35, 38 des bewegbaren Kanalsegments 31 einerseits und ortsfeste Gehäusebereiche 17, die an den Nebenstromkanal 2 angrenzen, und ortsfeste Segmente 39 des Abblasekanals 7 andererseits einander überlappen. Ein mit dem Bereich 17 verbundenes Abdeckblech 17a dient dazu, einen stets glatten Abschluss zum Nebenstromkanal 2 bereitzustellen.

Es wird darauf hingewiesen, dass im Ausführungsbeispiel der Figuren 5, 6A, 6B das Kanalsegment 31, das verschiebbar ausgebildet ist, eine Verlängerung 311 ausbildet, die den axial verlaufenden Abschnitts 72 des Abblasekanals 7 zum Nebenstromkanal 2 hin begrenzt. Dementsprechend ist eine nicht weiter dargestellte Führung 39 für die Verlängerung 311 im Bereich der Strebe 92 vorgesehen, vgl. Figur 5.

Im Ausführungsbeispiel der Figuren 5, 6A, 6B wird eine Reduzierung der Querschnittsfläche A₁, A₂ des Abblasekanals 7 dadurch erreicht, dass beim axialen Verschieben des Kanalsegments 31 zumindest Teilbereiche dieses Segments 31 in Richtung der gegenüberliegenden Begrenzungsflächen des Abblasekanals 7 bewegt werden.

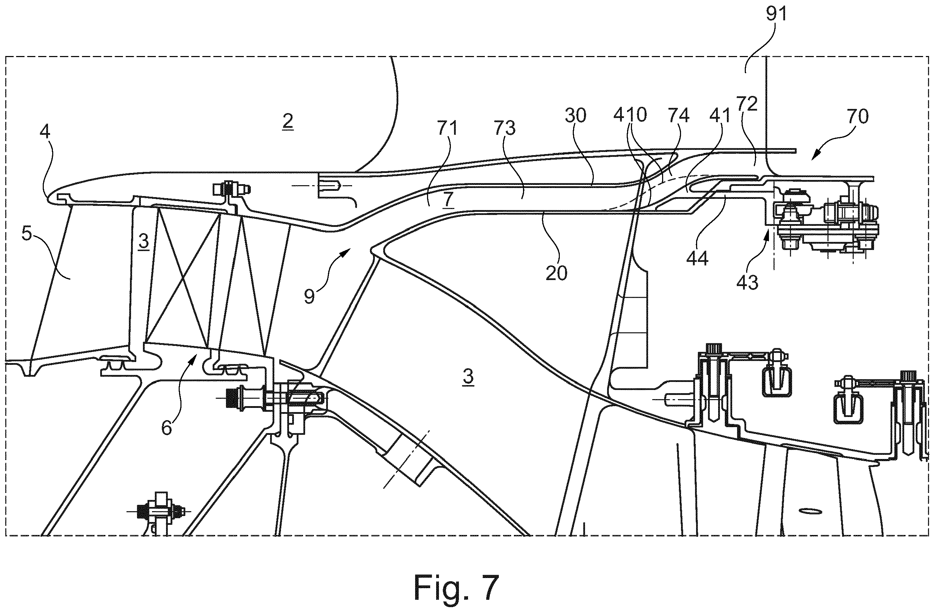

Die Figur 7 zeigt ein Ausführungsbeispiel, das eine Abwandlung des Ausführungsbeispiels der Figuren 1, 2A, 2B darstellt. So ist beim Ausführungsbeispiel der Figur 7 ein verschiebbares Element 41 vorgesehen, das über einen Aktuator 43 und Koppelmittel 44 in axialer Richtung im Abblasekanal 7 verschiebbar ist.

Der Abblasekanal 7 weist dabei eine Formgebung dahingehend auf, dass sich an einen ersten Abschnitt 71, der eine radiale Komponente aufweist, ein zweiter Abschnitt 73 anschließt, der im Wesentlichen in axialer Richtung verläuft, an den sich ein dritter Abschnitt 74 anschließt, der wiederum eine radiale Komponente aufweist, an den sich ein vierter Abschnitt 72 anschließt, der wiederum eine im Wesentlichen axiale Ausrichtung besitzt und dessen Ende 70 in den Nebenstromkanal 2 mündet. In dem gekrümmten Übergangsbereich zwischen den Abschnitten 73 und 74 ist dabei das verschiebbare Element 41 angeordnet, so dass sich bei dessen axialer Verschiebung seine Begrenzungsflächen 410 der gegenüberliegenden Wand 30 annähern.

Der gekrümmte Übergangsbereich zwischen den Abschnitten 73 und 74 des Abblasekanals 7 wird somit bei axialer Verschiebung des verschiebbaren Elementes 41 entgegen der Strömungsrichtung in seiner Querschnittsfläche reduziert.

Es wird darauf hingewiesen, dass in sämtlichen dargestellten Ausführungsbeispielen der Abblasekanal 7 vor seinem Ende 70, in dem er in den Nebenstromkanal 2 mündet, über einen längeren Abschnitt 72 einen parallelen Verlauf zum Nebenstromkanal 2 besitzt. Dies ist mit dem Vorteil verbunden, dass aus dem Abblasekanal 7 abgeblasene Luft in nur geringem Maße im Nebenstromkanal 2 verwirbelt, was Druckverluste vermeidet und zu einer Effizienzsteigerung führt.

Es wird darauf weiter hingewiesen, dass die in den Figuren 3, 4A, 4B und 5, 6A, 6B dargestellten Übergangsbereiche zwischen einem verstellbaren Kanalsegment und angrenzenden, ortsfesten Kanalsegmenten oder anderen Gehäusesegmenten statt durch eine Parallelführung auch in anderer Weise realisiert sein können. Beispielsweise kann vorgesehen sein, dass das verschiebbare Kanalsegment über eine Teleskopführung in einem ortsfesten Kanalsegment oder Gehäusesegment geführt wird. Die dargestellten Ausführungsvarianten sind insofern nur beispielhaft zu verstehen.

Die Erfindung beschränkt sich in ihrer Ausführung nicht auf die dargestellten Ausführungsbeispiele, sondern ist durch die nachfolgenden Ansprüche definiert. Insbesondere sind Lage und Form der jeweiligen Mittel, mit denen die Kanalgeometrie des Abblasekanals einstellbar ist, nur beispielhaft zu verstehen. Des weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen, sofern diese Werte und Teilbereiche unter die nachfolgenden Ansprüche fallen.

## Patentansprüche

1. Anordnung zum Abblasen von Verdichterluft in einem Triebwerk, wobei die Anordnung einen Abblasekanal (7) zum Abblasen von Verdichterluft aufweist,
**dadurch gekennzeichnet, dass**
der Abblasekanal (7) nicht mittels eines Verschließelementes zu verschließen ist, sondern die Kanalgeometrie des Abblasekanals (7) stromab einer Öffnung, über die die abzulassende Verdichterluft in den Abblasekanal (7) gelangt, einstellbar ist und damit im Abblasekanal (7) eine durch äußere Begrenzungsflächen definierte Querschnittsfläche zumindest in einem Teilbereich veränderbar ist.

2. Anordnung nach Anspruch 1, **dadurch gekennzeichnet, dass** die Querschnittsfläche (A₁, A₂) des Abblasekanals (7) zumindest in einem Teilbereich des Abblasekanals (7) kontinuierlich veränderbar ist.

3. Anordnung nach einem der vorangehenden Ansprüche, **dadurch gekennzeichnet, dass** der Abblasekanal (7) ein verschiebbares Element (11, 41) umfasst, das in einem Teilbereich des Abblasekanals (7) dessen Begrenzung im Hinblick auf das im Abblasekanal (7) strömende Fluid bildet, wobei bei Verschiebung des verschiebbaren Elements (11, 41) in Strömungsrichtung des Abblasekanals (7) die Kanalgeometrie verändert wird.

4. Anordnung nach Anspruch 3, **dadurch gekennzeichnet, dass**
- das verschiebbare Element (11, 41) in axialer Richtung verschiebbar ist und/oder
- das verschiebbare Element (11, 41) scheibenförmig oder ringförmig ausgebildet ist und/oder
- das verschiebbare Element (11, 41) konvex geformt ist.

5. Anordnung nach Anspruch 3 oder 4, **dadurch gekennzeichnet, dass** das verschiebbare Element (11, 41) in einem Abschnitt (72) des Abblasekanals (7) angeordnet ist, der sich parallel zu einem Nebenstromkanal (2), in den die Verdichterluft abgeblasen wird, erstreckt.

6. Anordnung nach einem der Ansprüche 3 bis 5, **dadurch gekennzeichnet, dass** das verschiebbare Element (11, 41) in einem Abschnitt (71-74) des Abblasekanals (7) angeordnet ist, der sich verengt und/oder der gebogen ausgebildet ist.

7. Anordnung nach einem der vorangehenden Ansprüche, **dadurch gekennzeichnet, dass** mindestens ein Kanalsegment (21, 31), das den Abblasekanal (7) begrenzt, verstellbar ausgebildet ist.

8. Anordnung nach Anspruch 7, **dadurch gekennzeichnet, dass**
- der Abblasekanal (7) durch eine Mehrzahl von Kanalsegmente begrenzt ist und zumindest einige der Kanalsegmente (21, 22) verstellbar ausgebildet sind derart, dass der Abstand der Kanalsegmente zueinander veränderbar ist, und/oder
- das mindestens eine Kanalsegment (21, 31) im Wesentlichen quer zur Strömungsrichtung oder mit einer quer zur Strömungsrichtung verlaufenden Komponente im Abblasekanal (7) verschiebbar ist und/oder
- mindestens ein Kanalsegment (21, 31) in axialer Richtung verschiebbar ist und/oder
- das verschiebbare Kanalsegment (21, 31) eine vordere oder hintere axiale Begrenzung des Abblasekanals (7) in einem Bereich des Abblasekanals (7) bildet, in dem dieser sich in einer Richtung erstreckt, die eine radiale Komponente aufweist.

9. Anordnung nach Anspruch 7 oder 8, **dadurch gekennzeichnet, dass** im Übergangsbereich des mindestens einen verschiebbaren Kanalsegments (21, 31) zu ortfesten Gehäusesegmenten (16, 17, 29, 39) eine Parallelführung (26, 27, 36, 37) mittels überlappender Gehäuseteile oder eine Teleskopführung realisiert ist.

10. Anordnung nach einem der vorangehenden Ansprüche, **gekennzeichnet durch** mindestens einen Aktuator (13, 23, 33, 43), über den Mittel (11, 21, 31, 41) zur Einstellung der Kanalgeometrie des Abblasekanals (7) verstellbar sind.

11. Anordnung nach einem der vorangehenden Ansprüche, **dadurch gekennzeichnet, dass** die Anordnung zusätzlich ein Verschließelement zum Verschließen oder teilweisen Verschließen des Abblasekanals (7) aufweist.

12. Anordnung nach einem der vorangehenden Ansprüche, **dadurch gekennzeichnet, dass** der Abblasekanal (7) einen Abschnitt (72) aufweist, der der sich parallel zu einem Nebenstromkanal (2), in den die Verdichterluft abgeblasen wird, erstreckt.

13. Triebwerk, insbesondere Turbofan-Triebwerk mit einer Anordnung mit den Merkmalen des Anspruchs 1.

14. Verfahren zum Abblasen von Verdichterluft in einem Triebwerk, bei dem abzublasende Verdichterluft aus einem Verdichter (6) des Triebwerks in einen Abblasekanal (7) geleitet wird, **dadurch gekennzeichnet, dass** der Abblasekanal (7) nicht mittels eines Verschließelementes verschlossen wird, sondern zum Einstellen des Massenstroms der abzublasenden Verdichterluft die Kanalgeometrie des Abblasekanals stromab einer Öffnung, über die die abzulassende Verdichterluft in den Abblasekanal (7) gelangt, verändert wird und damit im Abblasekanal (7) eine durch äußere Begrenzungsflächen definierte Querschnittsfläche zumindest in einem Teilbereich verändert wird.

## Claims

1. Arrangement for blowing off compressor air in an engine, wherein the arrangement has a blow-off duct (7) for the blowing-off of compressor air,
**characterized in that**
the blow-off duct (7) is not to be closed off by means of a closure element, but rather the duct geometry of the blow-off duct (7) is settable downstream of an opening, via which the compressor air to be released passes into the blow-off duct (7), and thus, in the blow-off duct (7), a cross-sectional area defined by external delimiting surfaces is variable at least in a sub-region.

2. Arrangement according to Claim 1, **characterized in that** the cross-sectional area (A₁, A₂) of the blow-off duct (7) is continuously variable at least in a sub-region of the blow-off duct (7).

3. Arrangement according to either of the preceding claims, **characterized in that** the blow-off duct (7) comprises a displaceable element (11, 41) which, in a sub-region of the blow-off duct (7), forms the delimitation thereof with regard to the fluid flowing in the blow-off duct (7), wherein the duct geometry is varied when the displaceable element (11, 41) is displaced in the flow direction of the blow-off duct (7).

4. Arrangement according to Claim 3, **characterized in that**
- the displaceable element (11, 41) is displaceable in an axial direction, and/or
- the displaceable element (11, 41) is of disc-shaped or ring-shaped design, and/or
- the displaceable element (11, 41) is of convex shape.

5. Arrangement according to Claim 3 or 4, **characterized in that** the displaceable element (11, 41) is arranged in a section (72) of the blow-off duct (7) which extends parallel to a bypass flow duct (2) into which the compressor air is blown off.

6. Arrangement according to one of Claims 3 to 5, **characterized in that** the displaceable element (11, 41) is arranged in a section (71-74) of the blow-off duct (7) which narrows and/or which is of curved design.

7. Arrangement according to one of the preceding claims, **characterized in that** at least one duct segment (21, 31), which delimits the blow-off duct (7), is designed to be adjustable.

8. Arrangement according to Claim 7, **characterized in that**
- the blow-off duct (7) is delimited by a plurality of duct segments, and at least some of the duct segments (21, 22) are designed to be adjustable such that the distance of the duct segments from one another is variable, and/or
- the at least one duct segment (21, 31) is displaceable substantially transversely with respect to the flow direction, or with a component extending transversely with respect to the flow direction, in the blow-off duct (7), and/or
- at least one duct segment (21, 31) is displaceable in an axial direction, and/or
- the displaceable duct segment (21, 31) forms a front or rear axial delimitation of the blow-off duct (7) in a region of the blow-off duct (7) in which this extends in a direction which has a radial component.

9. Arrangement according to Claim 7 or 8, **characterized in that**, in the transition region of the at least one displaceable duct segment (21, 31) to positionally fixed housing segments (16, 17, 29, 39), parallel guidance (26, 27, 36, 37) by means of overlapping housing parts, or telescopic guidance, is realized.

10. Arrangement according to one of the preceding claims, **characterized by** at least one actuator (13, 23, 33, 43), via which means (11, 21, 31, 41) for setting the duct geometry of the blow-off duct (7) are adjustable.

11. Arrangement according to one of the preceding claims, **characterized in that** the arrangement additionally has a closure element for closing off or partially closing off the blow-off duct (7).

12. Arrangement according to one of the preceding claims, **characterized in that** the blow-off duct (7) has a section (72) which extends parallel to a bypass flow duct (2) into which the compressor air is blown off.

13. Engine, in particular a turbofan engine, having an arrangement with the features of Claim 1.

14. Method for blowing off compressor air in an engine, in which compressor air to be blown off is conducted into a blow-off duct (7) from a compressor (6) of the engine, **characterized in that** the blow-off duct (7) is not closed off by means of a closure element, but rather, for the purpose of setting the mass flow of the compressor air to be blown off, the duct geometry of the blow-off duct is varied downstream of an opening, via which the compressor air to be released passes into the blow-off duct (7), and thus, in the blow-off duct (7), a cross-sectional area defined by external delimiting surfaces is varied at least in a sub-region.

## Revendications

1. Agencement pour le soufflage d'air de compresseur dans un groupe motopropulseur, l'agencement présentant un canal de soufflage (7) pour souffler l'air de compresseur,
**caractérisé en ce que**
le canal de soufflage (7) ne doit pas être fermé au moyen d'un élément de fermeture, mais la géométrie de canal du canal de soufflage (7) peut être ajustée en aval d'une ouverture par le biais de laquelle l'air de compresseur à évacuer parvient dans le canal de soufflage (7) et par conséquent une surface en section transversale définie par des surfaces de limitation extérieures peut être variée au moins dans une région partielle dans le canal de soufflage (7).

2. Agencement selon la revendication 1, **caractérisé en ce que** la surface en section transversale (A₁, A₂) du canal de soufflage (7) peut être variée en continu au moins dans une région partielle du canal de soufflage (7).

3. Agencement selon l'une quelconque des revendications précédentes, **caractérisé en ce que** le canal de soufflage (7) comprend un élément déplaçable (11, 41) qui, dans une région partielle du canal de soufflage (7), forme sa limitation en rapport avec le liquide s'écoulant dans le canal de soufflage (7), la géométrie de canal étant variée par déplacement de l'élément déplaçable (11, 41) dans la direction d'écoulement du canal de soufflage (7) .

4. Agencement selon la revendication 3, **caractérisé en ce que**
- l'élément déplaçable (11, 41) est déplaçable dans la direction axiale et/ou
- l'élément déplaçable (11, 41) est réalisé en forme de disque ou sous forme annulaire et/ou
- l'élément déplaçable (11, 41) présente une forme convexe.

5. Agencement selon la revendication 3 ou 4, **caractérisé en ce que** l'élément déplaçable (11, 41) est disposé dans une portion (72) du canal de soufflage (7) qui s'étend parallèlement à un canal d'écoulement auxiliaire (2) dans lequel l'air de compresseur est soufflé.

6. Agencement selon l'une quelconque des revendications 3 à 5, **caractérisé en ce que** l'élément déplaçable (11, 41) est disposé dans une portion (71-74) du canal de soufflage (7) qui se rétrécit et/ou qui est réalisée sous forme courbe.

7. Agencement selon l'une quelconque des revendications précédentes, **caractérisé en ce qu'**au moins un segment de canal (21, 31) qui limite le canal de soufflage (7) est réalisé de manière réglable.

8. Agencement selon la revendication 7, **caractérisé en ce que**
- le canal de soufflage (7) est limité par une pluralité de segments de canal et au moins certain des segments de canal (21, 22) sont réalisés de manière réglable de telle sorte que la distance entre les segments de canal puisse être variée, et/ou
- l'au moins un segment de canal (21, 31) peut être déplacé essentiellement transversalement à la direction d'écoulement ou avec une composante s'étendant transversalement à la direction d'écoulement dans le canal de soufflage (7) et/ou
- au moins un segment de canal (21, 31) peut être déplacé dans la direction axiale et/ou
- le segment de canal déplaçable (21, 31) forme une limitation axiale avant ou arrière du canal de soufflage (7) dans une région du canal de soufflage (7) dans laquelle celui-ci s'étend dans une direction qui présente une composante radiale.

9. Agencement selon la revendication 7 ou 8, **caractérisé en ce que** dans la région de transition de l'au moins un segment de canal déplaçable (21, 31) à des segments de boîtier fixes (16, 17, 29, 39), est réalisé un guide parallèle (26, 27, 36, 37) au moyen de parties de boîtier se chevauchant, ou un guide télescopique.

10. Agencement selon l'une quelconque des revendications précédentes, **caractérisé par** au moins un actionneur (13, 23, 33, 43) par le biais duquel des moyens (11, 21, 31, 41) pour ajuster la géométrie de canal du canal de soufflage (7) peuvent être réglés.

11. Agencement selon l'une quelconque des revendications précédentes, **caractérisé en ce que** l'agencement présente en outre un élément de fermeture pour fermer ou fermer partiellement le canal de soufflage (7).

12. Agencement selon l'une quelconque des revendications précédentes, **caractérisé en ce que** le canal de soufflage (7) présente une portion (72) qui s'étend parallèlement à un canal d'écoulement secondaire (2) dans lequel est soufflé l'air de compresseur.

13. Groupe motopropulseur, en particulier turboréacteur à double flux, comprenant un agencement ayant les caractéristiques de la revendication 1.

14. Procédé pour le soufflage d'air de compresseur dans un groupe motopropulseur, dans lequel de l'air de compresseur à souffler est guidé hors d'un compresseur (6) du groupe motopropulseur dans un canal de soufflage (7), **caractérisé en ce que** le canal de soufflage (7) n'est pas fermé au moyen d'un élément de fermeture, mais la géométrie de canal du canal de soufflage est variée pour ajuster le débit massique de l'air de compresseur à souffler en aval d'une ouverture par le biais de laquelle l'air de compresseur à évacuer parvient dans le canal de soufflage (7), et par conséquent une surface en section transversale définie par des surfaces de limitation extérieures est variée au moins dans une région partielle dans le canal de soufflage (7).
